# EUROPEAN PATENT APPLICATION

(11) **EP 1 134 644 A2**
(43) Date of publication of application: **19.09.2001**
(21) Application number: 01301412.1
(22) Date of filing: 19.02.2001
(51) Int. Cl.: G06F 1/00

(54) **Method and system for verifying access to a network environment**

(30) Priority: 14.03.2000 US 524936
(71) Applicant: International Business Machines Corporation, Armond, NY 10504 (US)
(72) Inventor: Parry, Barbara G., c/o IBM UK Ltd, Int. Prop Law, Hampshire S021 2JN (GB); McKay, Michael S., c/o IBM UK Ltd, Int. Prop Law, Hampshire S021 2JN (GB)
(74) Representative: Burt, Roger James, Dr.

(57) **Abstract**

An exemplary embodiment of the invention is a method for automating administration functions in a distributed network environment for use in managing and verifying access rights to an entity for a plurality of different types of entities within the network. The method includes compiling a list of user IDS, the user IDs being associated with at least one system. An address book is retrieved and data in the list is compared with data contained in the address book. Invalid data in the list is flagged. User-defined reports are then generated based upon results of comparing of the data in the list with data contained in the address book. A system and storage medium for implementing the method are also disclosed.

## Description

Many organisations are now using multiple computers interconnected into a distributed computing environment (DCE) in which users access distributed resources and process applications. Various applications may be utilised to provide distributed services such as data sharing, printing services and database access through a distributed file system.

Distributed file systems provide many advantages over a standalone file server, such as higher availability of data and resources, the ability to share information throughout a very large-scale system, and protection of information through the use of security mechanisms. Distributed file systems also bring together all of the files stored in various file systems in a global namespace. Multiple servers can export their file system to this namespace. All distributed file system users, in the meantime, share this namespace, making all distributed file system files readily available from any distributed file system machine.

Regardless of whether a DCE is simply two computers coupled peer-to-peer, or a wide area network with thousands of users, a security system will typically be included to limit access rights to entities (printers, modems, other networks, directories, files, data, etc.) on the network and to identify each user that can connect to the network.

Control of access to entities on a computer network is very important. Data that are personal in nature or which comprise proprietary or sensitive information should not be freely accessible or usable by all of the users connected to the network. For example, e-mail messages should only be accessible by the intended recipient. Personnel data files that include details about each employee in a corporation should only be accessible by a limited group, e.g., only by people in the human resource department of the corporation. The right to change the contents of files, read files, or execute files must often be restricted to specified users to maintain the network integrity or to satisfy licensing requirements that limit the number of users who can execute a program.

A network or systems administrator is typically assigned the responsibility for establishing and maintaining defined groups of users, determining who has the right to connect to the network, and for initially determining the rights of each group and individual users in respect to entities on the network. A group will normally include one or more users having some common relationship to the entities for which access rights are initially granted. For example, clerks in the accounting department of a corporation might comprise an "Accounting Group," which has full rights to certain accounting programs and to certain accounting data files, and limited rights to others. The manager of the accounting department would typically be a member of the "Accounting Group" and might also be a member of an "Accounting Supervisor Group," which has full rights to more sensitive accounting data files, and limited rights in extremely sensitive accounting data files.

The rights granted to a group or an individual user determine whether members of that group or that user can control access to other entities on the system. Thus, a user with full rights in a directory can control access by other users on the network to that directory and to subdirectories of that directory or files that the user creates within that directory.

One form of access control to entities employs access control lists (ACLs) comprised of a set of access control entries (ACEs). An ACL may be associated with an entity on the network. An ACE typically includes an identifier (platform or operating system specific) for a user or a group and some encoding or representation that specifies the rights granted or denied to that user or group with regard to the object. An individual user or group seeking access to an object on an entity is referred to as a "requester." The access mask represents an encoding of operations relevant to the entity and/or to the environment in which it is used. Accordingly, the ACL specifies who has access to the entity and the nature of that access.

In larger networks, access administration is time consuming and requires a great deal of human intervention. A typical system or access administration system is centralised to one location and maintained by one person or department. A typical system or access administrator is responsible for developing, implementing and continuously updating a system of access for use within a DCE. For example, requests for new password IDs would need to be individually evaluated and approved (or denied) as required. This process might involve multiple levels of approval or consideration by various individuals or departments before the changes could be entered into the system which translates to greater processing time for each request. Additionally, the system or access administrator would need to continuously update the system criteria for which the access rights are granted as the needs of the organisation necessitates. The greater the amount of manual manipulation of this data, the higher the risk of error is likely to result. It is desirable to facilitate and automate this system of access administration in a DCE environment.

According to one aspect of the present invention a method is provided for automating administration functions in a distributed network environment for use in managing and verifying access rights to an entity for a plurality of different types of entities within the network, the method comprising: compiling a list of user IDS, said user IDs being associated with at least one system; retrieving an address book; comparing data in said list with data contained in said address book, wherein invalid data in said list is flagged; and generating user-defined reports based upon results of said comparing of said data.

Preferably the method further comprises accessing said list of user IDs via remote function call. Additionally it may comprise modifying data contained in said results of said comparing of said data.

Preferably, the method further comprises: sending notices to notice receivers by a notice sender, said notices including: confirmatory requests for verification of continued access rights; user ID data for each said user ID currently having access rights; a user-defined time limit for responding to said notice; and verifying said continued access right based on a response to said notice by said notice receiver.

Said notices may include a first notice and a second notice, wherein said second notice is sent to said notice receivers who have not responded to said first notice by said time limit and, wherein further, said second notice contains a second user-defined time limit for responding.

Advantageously, each of said notices contains a unique passcode, said passcode identifying a notice receiver and may further comprise: each of said notices including a link to a network page, wherein activating said link causes said passcode to be automatically registered.

With advantage, where notices are sent to a notice receiver, verifying said continued access rights includes confirming completion of said verification by said notice receiver; said completion causing verification results and date of said verification to be registered.

Preferably, access rights are denied to said entity for said user IDs for which no response to said requests for verification was received by said notice sender within said time limit prescribed in said notice.

Denying access rights may be performed manually by said notice sender. Alternatively, denying access rights may be automatically executed upon expiration of said time limit prescribed in said second notice. Also, the denying of access rights may be automatically reversed upon subsequent receipt of said response to said requests for verification by said notice sender or, alternatively, may be manually reversed upon said subsequent receipt of said response.

The method may also comprise deleting said user IDs for which no response to said requests for verification was received by said notice sender.

According to a second aspect of the present invention a system is provided for automating administration functions in a distributed network environment for use in managing and verifying access rights to an entity for a plurality of different types of entities within the network, the system comprising: a computer network including: at least one entity; at least one notice sending device in communication with said at least one network entity; at least one notice receiving device in communication with said notice sending device; a database of user IDs, wherein said user IDs are associated with at least one system; and an address book containing user information; said notice sending device verifying access rights in response to said user IDs and said address book.

In such a system, preferably, said notice sending device: compiles a list of user Ids; retrieves the address book; performs a comparison of data in said list with data contained in said address book, wherein invalid is flagged; and generates user-defined reports based upon results of said comparison.

Said list of user IDs may be accessed by remote function call. Also, data contained in said results of said comparisons may be modified by said notice sending device.

Preferably the system further comprises said notice sending device sending a notice to said notice receiving device, said notice including: confirmatory requests for verification of continued access rights; user ID data for each said user ID currently having access rights; a user-defined time limit for responding; and said notice receiving device verifying said continued access rights based on a response to said notice.

Advantageously, said notice includes a first notice and a second notice, wherein
said second notice is sent to those said notice receiving devices which have not responded to said first notice by said time limit and, wherein further, said second notice contains a second user-defined time limit for responding.

With advantage, said notice contains a unique passcode, said passcode identifying a notice receiving device and may further comprise said notice including a link to a network page, wherein activating said link causes said passcode to be automatically registered.

Preferably said verification of said continued access rights includes confirming completion of said verification by said notice receiving device, said completion causing verification results and date of said verification to be registered.

Preferably also, the system provides that said user IDs for which no response to said requests for verification request was received by the notice sending device within said time limit are subsequently denied access rights to said entity. Said user IDs may be denied access rights manually by said notice sending device or, alternatively, said user IDs may be denied access rights automatically upon expiration of said time limit prescribed in said notice.

The denied access rights may be automatically reinstated upon subsequent receipt of response to said requests for verification by said notice sending device or, alternatively, may be manually reinstated upon subsequent receipt of said verification by said notice sending device.

The system may also provide that said user IDs, for which no response to said requests for verification was received by the notice sending device within said time limit, are deleted by said notice sending device.

According to a third aspect of the present invention, an article of manufacture comprises: a computer usable medium having a computer readable program code embodied therein for automating administration functions in a distributed network environment for use in managing and verifying access rights for a plurality of different types of entities within the network, the computer readable program code in said article of manufacture comprising: computer readable program code for causing a computer to compile a list of user IDs, said user IDs associated with at least one system; computer readable program code for causing a computer to retrieve an address book; computer readable program code for causing a computer to compare data in said list with data contained in said company address book, wherein invalid data in said list is flagged; and computer readable program code for causing a computer to generate user-defined reports based upon results of said comparing of said data.

The article of manufacture, preferably, further comprises: computer readable program code for causing a computer to access said list of user IDs via remote function call.

The article of manufacture may additionally further comprise: computer readable program code for causing a computer to modify data contained in said results of said comparing of said data.

Advantageously, the article of manufacture, may comprise: computer readable program code for causing a computer to send a notice to notice receiving devices, said notice including: confirmatory requests for verification of continued access rights, user ID data for each said user ID current having access rights; a user-defined time limit for responding to said requests; and computer readable program code for causing a computer to verify said continued access rights based on a response from said notice receiving device.

Further advantageously, the said notice includes a first notice and a second notice, wherein said second notice is sent to said notice receiving devices which have not responded to said first notice by said time limit and, wherein further, said second notice contains a second user-defined time limit for responding.

Said notice may contain a unique passcode, said passcode identifying a notice receiving device.

The article of manufacture may further comprise: computer readable program code for causing a computer to provide said notice with a link to a network page, wherein activating said link causes said passcode to be automatically registered.

Preferably, the article of manufacture provides that said verification of said continued access rights includes confirming completion of said verification by said notice receiving device, said completion causing verification results and date of said verification to be registered.

The article of manufacture, preferably, further comprises: computer readable program code for causing a computer to deny access rights to said user IDs for which no response to said requests for verification was received. Said denying of access rights may be performed manually or may be automatically executed upon expiration of said time limit prescribed in said notice.

Said denying of access rights may be automatically reversed upon subsequent receipt of said response to said requests for verification or alternatively may be manually reversed upon said subsequent receipt of said response.

The article of manufacture may further comprise: computer readable program code for causing a computer to delete said user IDs for which no response to said requests for verification was received.

An exemplary embodiment of the invention is a method for automating administration functions in a distributed network environment for use in managing and verifying access rights to an entity for a plurality of different types of entities within the network. The method includes compiling a list of user IDS, the user IDs being associated with at least one system. An address book is retrieved and data in the list is compared with data contained in the address book. Invalid data in the list is flagged. User-defined reports are then generated based upon results of comparing of the data in the list with data contained in the address book. A system and storage medium for implementing the method are also disclosed.

For a better understanding of the present invention reference will now be made, by way of example, to the accompanying drawings, wherein like elements are numbered alike in the several FIGURES and in which:
FIG. 1 is a block diagram of a portion of a system that includes a plurality of workstations and servers on which access is controlled;
FIG. 2 is an exemplary administration screen that includes a pull down menu and a customer window that enables an administrator to selectively configure or change a customer data base;
FIG. 3 is an exemplary maintenance window that illustrates how an administrator can selectively configure system identifiers (SIDs) within a customer, as well as other desired criteria;
FIG. 4 is an exemplary web screen as seen by a user which illustrates the projects or groups defined for a given customer as well as the SIDs which are assigned for each project or group;
FIG. 5 is an exemplary administration screen and main access profile window that illustrates how an administrator may create, change or delete a main access profile for a given SID;
FIG. 5A is an exemplary access profile window that illustrates how an administrator may create a new access profile within an SID;
FIG. 6 is an exemplary administration screen that includes a pull down menu and a client window that enables an administrator to selectively configure clients within an SID;
FIG. 7 is an exemplary administration screen that includes a pull down menu and approver windows that enable an administrator to selectively configure system authorisers or approvers for an SID;
FIG. 8 is an exemplary administration screen that includes pull down menus and a maintenance window that enables an administrator to review the status of requests that are pending authorisation in a queue.

FIG. 9 is an exemplary administration screen that includes a maintenance window and user data window that enable an administrator to review specific details concerning an individual request in a queue.

FIG. 10 is an exemplary administration screen that includes pull down menus and a "Complete/Reject User Requests" window that enable an administrator to execute approved requests which must be processed manually.

FIG. 11 is an exemplary flowchart that shows the logical steps implemented to select and control access to an entity on the network;

FIG. 12 is an exemplary administration screen that includes a pull down menu and reverification window that enable an administrator to periodically evaluate which users continue to require access to systems for which they have been granted access;

FIG. 13 is an exemplary reverification window that enables an administrator to select and define the group of users for which access requirements are to be evaluated;

FIG. 14 is an exemplary administration screen that includes a reverification window displaying a table of information including a group of users within a system or client that was selected by the administrator for evaluation of access requirements;

FIG. 15 is an exemplary administration screen that includes a reverification window and pull down menu that enables an administrator to verify whether the users identified in the table are still employed and to make corrections or updates to the user data;

FIG. 16 is an exemplary administration screen that includes a reverification window and pull down menu that enables an administrator to generate various reports pertaining to the user data;

FIG. 17 is an exemplary mail report screen as viewed by the receiving manager that displays a listing of user data for which the manager is required to verify user access requirements.

FIG. 18 is an exemplary reverification status report screen that allows an administrator to manage the reverification mail report process.

FIG. 19 is an exemplary administration screen that includes a log viewer window that enables an administrator to search a variety of data contained in the user identification administration system and can be organised by one or many different selected criteria;

FIG. 20 is an exemplary search function window of the log viewer tool that allows an administrator to further define a search for a specified SID(s) or client(s); and

FIG. 21 is an exemplary flowchart that shows the logical steps implemented for automatic password resets.

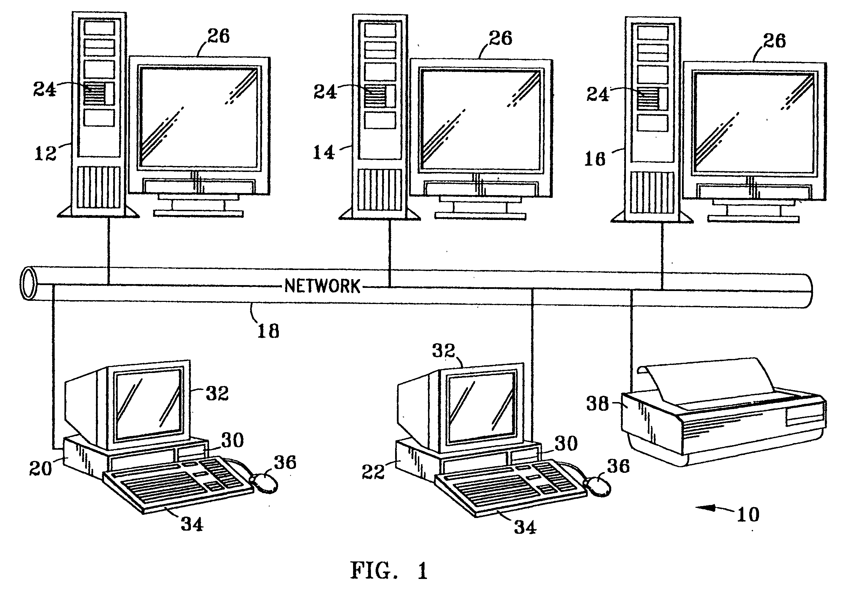

The user identification administration system will typically be implemented through a system that includes one or more servers and one or more entities interconnected within a distributed computing environment (DCE). A portion of an exemplary system 10 on which the invention might be used is shown in FIG. 1. Although not necessary to realise the advantages of the present invention, system 10 may be part of a wide area network in which different geographical locations are interconnected, either by high-speed data lines or by radio links, interconnecting hundreds of workstations at widely disparate locations. In the simplified diagram of FIG. 1, only three servers 12, 14, and 16 are shown, coupled by a network 18 to two workstations 20 and 22, and to a printer 38. It will be understood by those of ordinary skill in the art that the present invention is also usable on multiple types of network configurations, such as a token ring or star configurations. As is typical in a networked system, each of servers 12, 14, and 16 includes at least one hard drive 24 on which are stored a plurality of files, including data and applications that can be accessed by the workstations 20 and 22. In addition, each server is provided with a monitor 26. Although not specifically shown, each server can also be coupled to a keyboard for entry of commands and data used in configuring and controlling the operation of the server.

Each of the workstations 20 and 22 may be a general-purpose computer which includes a hard drive 30 for storing programs, which can be executed by a central processing unit (CPU) that is disposed on a motherboard (neither shown) within workstation. A display screen 32 is provided on each of the workstations. The user can control the workstation and provide input of commands and data via a keyboard 34 and/or a mouse 36 (or other suitable input device). Each of workstations 20 and 22 can access any of servers 12, 14, or 16 through network 18.

As described above, control of access to entities on a computer network is important. A network or system administrator is responsible for establishing and maintaining access to these entities within the network by other users. The user identification administration system is designed to structure requests, approvals for requests, and the implementation of those requests into an easy, user friendly tool that utilises a network interface as a front end.

Once the user identification administration system is established, an administrator with full access rights, referred to as a level one administrator, can begin to set up the network permissions structure. As explained further below, the user identification administration system can support a single or multiple-customer base in which each customer may have multiple groups/projects, each project multiple system identifiers (SIDs) and each SID multiple clients.

Multiple level one administrators may be designated in a given network. Furthermore, any level one administrator has access to create or delete any level 1 or level 2 ID and can change addresses or passwords for any other level 1 or level 2 ID. Initially, a level one administrator logs on to the user identification administration system and sets up or defines the permissions structure across multiple levels. A "customer" is a generic term and can be defined by a level one administrator in a manner consistent with the needs of the individual organisation or, alternatively, may be omitted altogether. For example, in a larger network, where a plurality of customers are desired, a customer can be defined as one of many divisions or departments within the organisation. In smaller networks, a customer database may not be required and can be omitted altogether. Any number of customers may be designated.

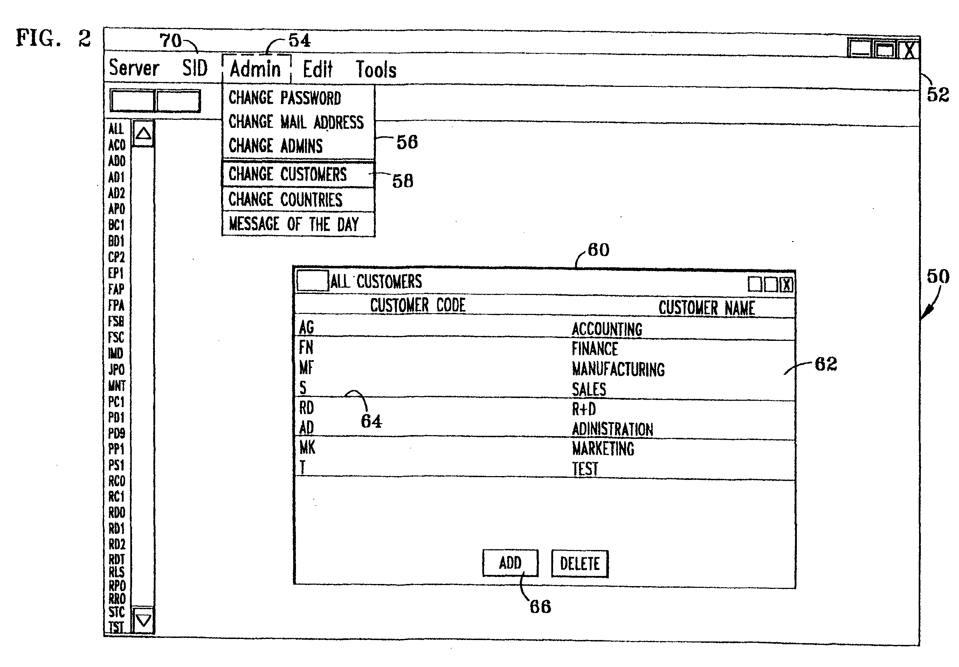

FIG. 2 depicts an example of a user identification administration system 'administration' screen 50 in which the administrator can set the access permissions for a particular directory or file that has been selected. A tool bar 52 identifies the application from which the present invention is accessible. As shown in FIG. 2, an option 54 labelled "Admin" has been selected from the tool bar 52, causing a plurality of additional menu options to be displayed in a drop down list box (or pull down menu) 56, the fourth of which is an option 58, reading "change customers." By choosing option 58, a level one administrator can add, change or delete a customer as required. FIG. 2 illustrates an example of a customer window 60 wherein eight customers 62 have already been created and defined and eight predefined customer codes 64 have been assigned to each customer respectively. In an exemplary embodiment, only a level one administrator has the access permission to add or delete a customer. However, a level one administrator may grant permission for a level two administrator to change information regarding an existing customer. To add a customer, a level one administrator selects the "add" function 66 on the customer screen of FIG. 2.

A window appears (not shown) and queries the user to enter a customer code and customer name (neither shown). The user then selects the "commit" button (not shown) to complete the process (or alternatively, the "cancel" button to abandon the action). The customer code and name, as entered by the level one administrator, is immediately reflected on a main network page (not shown). SIDs may now be assigned to this customer.

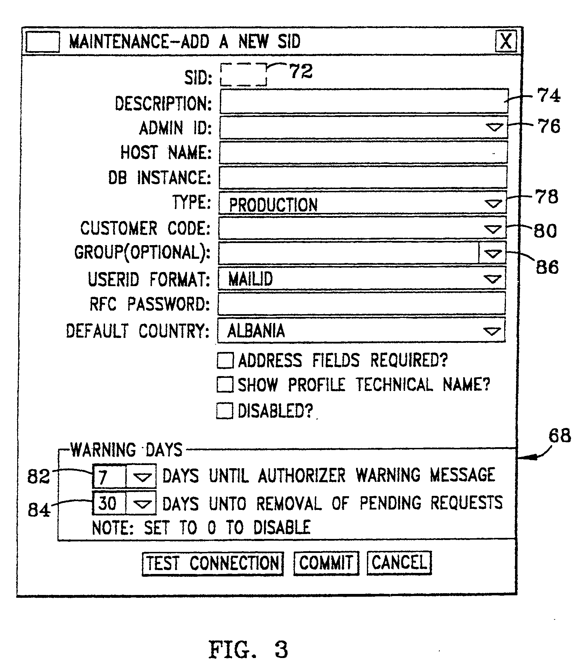

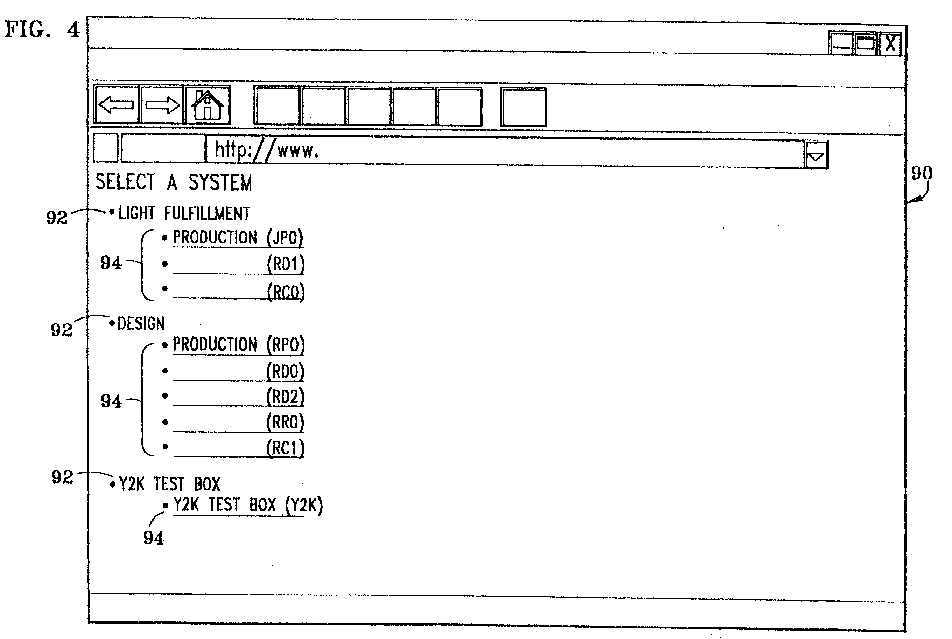

An SID is a unique identification which identifies a system that users may access over network 18 of FIG. 1, the type of SID and the administrator who owns or controls access to the SID. FIG. 3 illustrates a user identification administration system 'maintenance' window 68 in which a level one administrator may add a new SID to a customer. Only a level one administrator may add or delete an SID. However, a level one administrator may grant access permission to a level two administrator to change information regarding an existing SID that is controlled by the level two administrator. To add an SID, a level one administrator selects the SID option 70 on the toolbar 52 of FIG. 2 and clicks on "new" from the pulldown menu (not shown). The window 68 referred to in FIG. 3 appears. The level one administrator assigns a unique identifier identifying the SID in the SID box 72 and then enters a description of the system in the description box 74 as it is wished to appear on the main network page, as illustrated in FIG. 4 at 94. The level one administrator then selects the admin ID that owns this system from the pulldown menu 76. Other information regarding the SID may be entered as shown in FIG. 3.

The level one administrator then selects one of three types of systems from the type 78 pulldown menu. By specifying the type of system, the level one administrator controls how passwords to access the system are distributed. A first type of system is a "production" system which designates that passwords for accessing this system will only go to the owner's manager, including new IDs and password resets. A second type of system is a "production with password to user" system which designates a production system in which a password should be sent to both the owner's manager and the owner. A third type of system is a non-production system which designates that the system is not a production system. In non-production systems, passwords are sent to both the manager and owner. The level one administrator then assigns the desired SID designated in the SID box 72 to a customer by selecting from the customer code 80 pull down menu.

Requests to a system are approved by one or more approvers as described herein. Shown in FIG. 3 is a first time limit 82 which designates how many days a request can sit without action before a reminder is sent to the delinquent approver or approvers. If stage one approvers are delinquent, only they will receive the note. If some stage one approvers have already approved, they will not receive the notice. If a stage two approver is the delinquent party, only that approver will receive the notice and not stage one approvers. If this notice function is not desired, the first time limit 82 should be set to zero to deactivate this notice.

A second time limit 84 indicates the time a request may sit in a queue without being completely approved. A count starts at the original request date, so this option may not be less days than the first time limit 82. Once the second time limit 84 is reached the request is deleted from the queue. A note stating that the request has been deleted and to resubmit if still required is sent to all approvers and the requester. If this function is not desired, the second time limit 84 should be set to zero to deactivate this function.

A level one administrator may optionally define groups or projects within a customer by selecting the "group designation function" 86 and typing in a group name as it should appear on the main network page. In a network page that is reproduced in FIG. 4, a specific example of a customer profile 90 as seen by a user illustrates three user-defined groups or projects 92 each of which contains one or more SIDs 94.

In creating an SID, an administrator also defines the access profiles which are available for a given system. An access profile defines the level of access granted to a user, or a group of users who share common job requirements within a system. There are two types of access profiles that may be defined: 'main' and 'add-on'. The difference in these types of access profiles is in their programmed definition. Main access profiles require one, and allow only one main access profile to be selected for a userid. Add-on access profiles allow none, one, or many add-on access profiles to be selected for a userid. Those SIDs that wish only one access profile for one user Id (often used in a production environment for separation of duty reasons), would only define main access profiles and, therefore, prevent a user Id from obtaining more than one access profile. Those SIDs that have access profiles containing most of the job requirements but allow certain access profiles to be added, may use 'main' for the job level profiles and 'add-ons' for the additional authority profiles. If an SID requires any combination of access profiles, the administrator may just utilise the 'add-ons' and therefore allow selection of any combination of access profiles. If utilising 'category' access profiles, approvers may be defined by category through a function called "defining approvers" as discussed below.

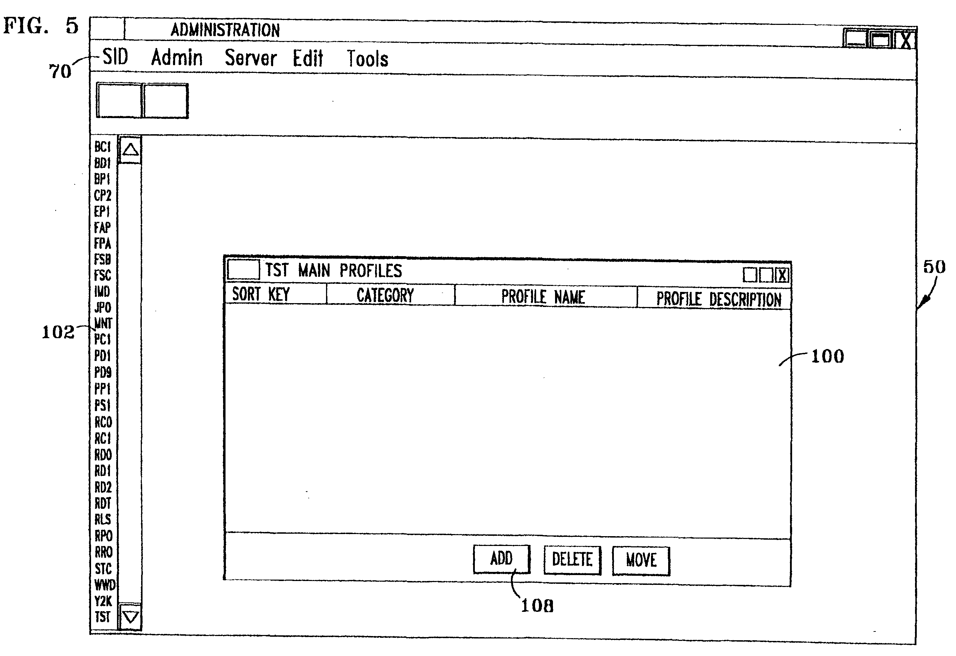

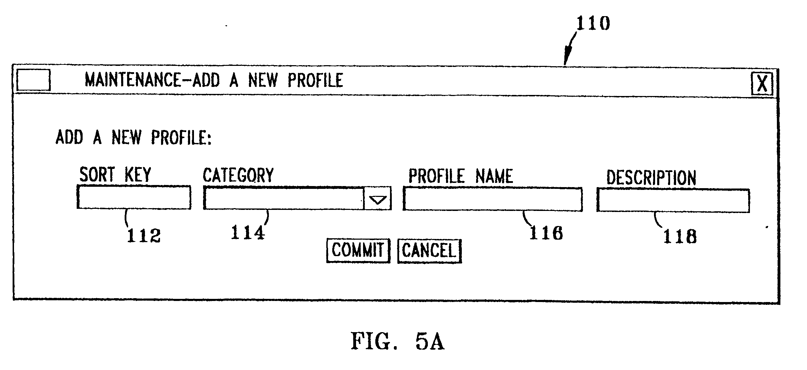

FIG. 5 illustrates a main access profile window 100 within an administrative screen 50 whereby an administrator can add a new access profile to a customer network page. To add a new main access profile an administrator first highlights the desired SID displayed on the SID menu 102 located on the left of the administrative screen 50, then selects SID 70 on the toolbar, followed by selecting "profiles" on the pulldown, (not shown) and "main" (not shown) on the final pulldown menu (not shown). The window 100 shown in FIG. 5 is presented to the administrator. The administrator then selects the "add" 108 button and the "Add a New profile" 110 window of FIG. 5A is revealed. The administrator enters a sort key 112 which is used to sort the presentation of the access profiles on the customer network page. The access profiles will be sorted numerically. If categories are utilised for the SID, the access profiles will be sorted numerically within each category 114. A "category" is a generic term and can be defined by an administrator according to the needs of the organisation. The administrator then enters the technical access profile name in the "profile name" box 116 and the description of the access profile in the "description" box 118. The technical name of the access profile is that which will be recognised by the system on which the Id is created. The description of the access profile is what is reflected on the customer page unless the administrator desires to display the technical name along with the description, in which case, the administrator may do so through the "Adding projects/SIDs" 68 function described in FIG. 3.

Alternatively, an administrator may add an "add on" access profile (not shown) in lieu of a "main" access profile by selecting "add on" from the pull down described in FIG. 5 instead of selecting "main" (not shown). Another feature of the access profile presentation features is the ability to customise the colour, text style, and size of the text to be presented on the customer network page, as well as including headers or columns. To accomplish these effects, text tags may be utilised in the normal text area of the main or add-on access profile menus described in FIG. 5.

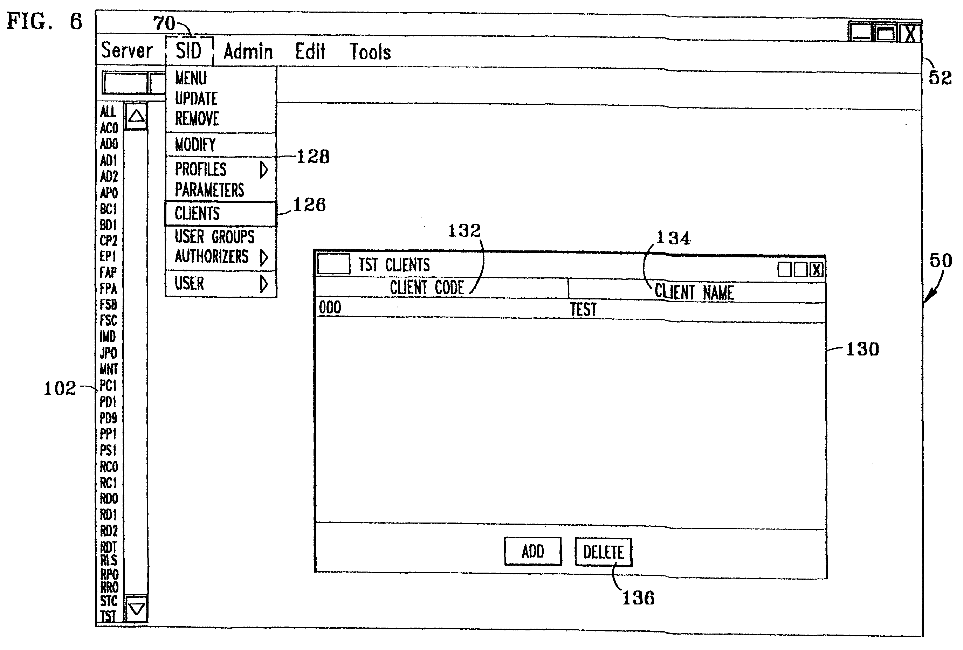

Where a DCE organisation desires to utilise a multi-client structure within an SID, FIG. 6 illustrates an administration screen 50 for configuring such clients. A "client" is a generic term which can be defined by an administrator according to the needs of the organisation. An administrator first highlights the desired SID from the SID menu 102 located on the left side of the administration screen 50, then selects the "SID" 70 option on the toolbar 52, followed by selecting "clients" 126 on the pulldown menu 128. A pop-up window 130 appears and queries the administrator to enter a client code 132 and client name 134. The client name 134 is immediately compiled and reflected on the main network page under the main client list heading (not shown). Updates to the client list may be completed by selecting the "client name" field 134 and directly entering the desired information. Similarly, a client name may be deleted by selecting the "client name" field 134 and selecting "delete" 136. A confirmation window will be displayed and the administrator will select "OK" to confirm the removal of the client (not shown). Another feature of the user identification administration system is the variable options provided for the approval setup via various stages and types of approvers. The terms, "approver" and "authoriser" are used interchangeably. Two stages of approvers exist for providing a two-step multilevel authorisation to network information. an SID can be configured to comprise either one-stage or two-stage approval. Further, stage 1 approvers receive requests for authorisation before designated stage 2 approvers. If a stage 1 approver rejects a request, a stage 2 approver will not receive the request. Additionally, within each stage of approval there exists several types of approvers: General, Category, Client, Delete and Change. Delete and Change approvers may only utilise a one-stage approval where the other types of approvers may utilise the two-stage approval method. General approvers are on the approval list no matter what the request is. Category approvers are used where job profiles are grouped into categories within a customer as shown in FIGs. 5 and 5A. The category approver is on the approval list if a job profile for which the approver is designated is selected by the requester. If the system is a multi-client structure, a client approver may be designated for each client. The client approver will only be on the approval list if the requester selects their client for a request. A delete approver is optional unless the only approver designated for the system is a category approver. Since a delete request does not require selecting a category, a delete approver must be defined. If there is already a general or client approver the delete approver will be in addition to these approvers. A change approver is designated for change approvals only. Each of the above approval types may have a single approver, two or more approvers where each must approve, or two or more approvers linked with an 'any one of' condition (e.g., a Boolean OR) which indicates that as soon as any one of these approvers approves, the approval is complete. If an "and" condition is selected, which is entered utilising an "&" between the mail IDs of the approvers, each approver will receive their own unique passcode. If an "or" condition is selected, which is entered utilising a "*" between the mail IDs of the approvers, all the "or-ed" approvers receive the same passcode. All of the above may be used in any combination.

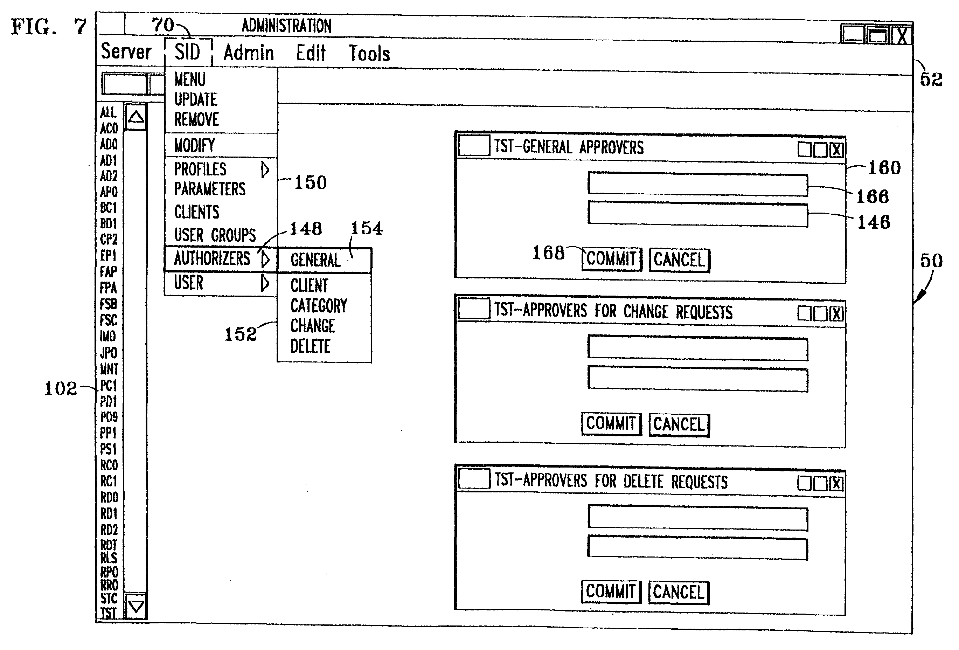

FIG. 7 illustrates an administration screen 50 for use in designating a variety of approvers. To add approvers, the administrator first highlights the desired SID displayed on SID menu 102 located on the left side of the administration screen 50, then selects "SID" 70 on the toolbar 52, followed by selecting "authorisers" 148 on the pulldown menu 150, and selects the type of authoriser on the final pulldown menu 152. Selecting general approver 154 brings up a window 160 that allows direct entry of an approver in the approver box 166 for the appropriate stage of approval. To update this approver, the administrator selects the approver box 166 and types the corrected information therein, then selects the "commit" button 168 to confirm the changes made. The administrator then types in the full e-mail address of the approver in the appropriate approver stage box, selecting either the Stage 1 box 166 or Stage 2 box 146. If more than one approver is desired (e.g., a Boolean AND condition), the administrator enters "e-mail&e-mail" in stage box 166 or 146. If either approver is to approve (e.g., Boolean OR condition), type in "e-mail^{*}e-mail" in stage box 166 or 146. The string may be concatenated for any combination: "email1^{*}email2&email3&email4", etc. Other types of approvers may be similarly configured and will not be further discussed.

The user identification administration system is designed to be utilised to automatically complete requests once all approvals are completed. However, it may also be configured not to process the approved requests automatically, but instead require manual completion. All requests that are automatically processed will be entered into, and removed from a queue without requiring any intervention. There are, however, many reasons why requests that were entered into the queue must be managed. There are two types of queues. The first queue contains all requests that are pending authorisation. Manipulation of this queue may be due to a lost approval code, a request that was inadvertently entered repeatedly, etc. The second queue contains those requests that have completed the approval process, have been fully approved, and are awaiting execution of the request. If the system is set up for automatic execution, and the request is completed without error, the record spends only a fraction of a second in this queue. However, if the request has an error (such as a profile not found during creation), or if the system is not set up for automatic execution, the request must manually be manipulated from this queue. Another feature that helps to manage the pending authorisation queue, is the queue warning setting which setting and usage is set forth in the "Adding an SID" section of FIG. 3 under the warning fields 82 and 84. This facility will allow the set up of a reminder notice, or the removal of a pending request, if the request for authorisation is not acted upon in the specified amount of time.

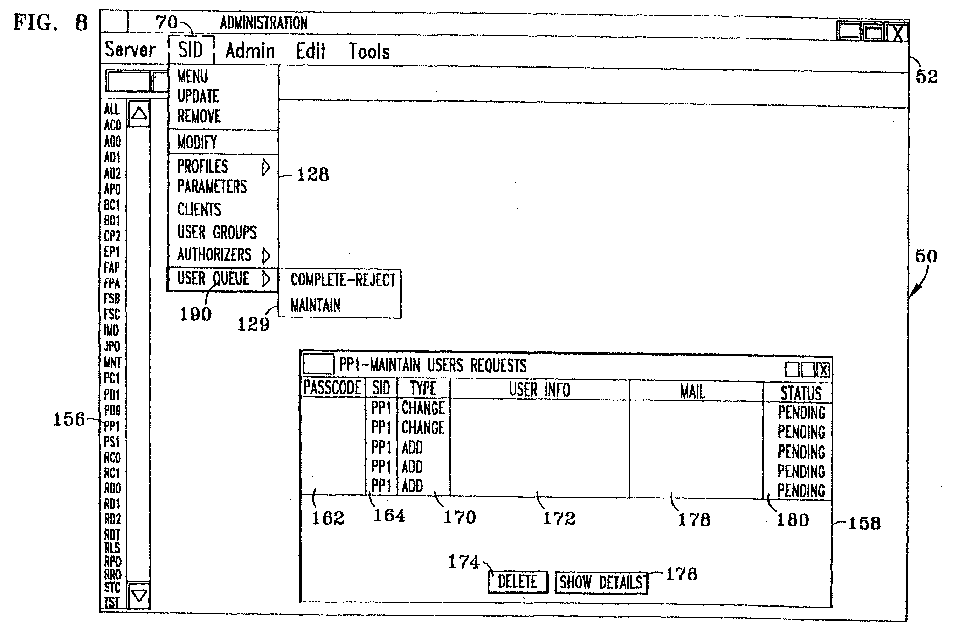

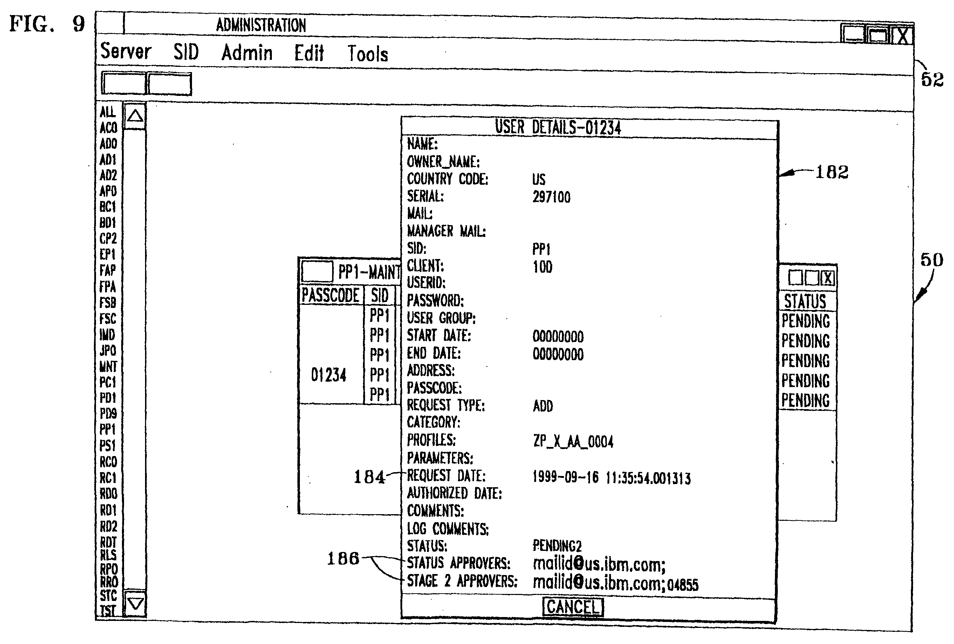

Management of the request queue is available through the queue management facility illustrated in FIG. 8. To access the first queue, an administrator first highlights the SID 156 displayed on the left side of the administration screen 50, followed by selecting "SID" 70 on the toolbar 52, and "User Queue" 190 on the pulldown menu 128 and selects "Maintain" 129 for the requests pending authorisation. The "Maintain User Requests" window 158 appears which displays a summary of all requests that are in this queue. The first field 162 of the summary contains the primary passcode (the passcode that goes to the approver has an additional four characters that are required for approval). The next field 164 contains the SID, followed by the type of request 170 (add, change, reset, etc). The next field 172 contains user information followed by the user's mail address 178, and the last field 180 is the status (either pending or pending2 for second stage). To delete an entry, the administrator highlights the entry and clicks "delete" 174. A confirmation window will appear, and the administrator then selects "confirm" (neither shown). To see the full record, the administrator clicks "show details" 176 or double clicks on the entry. The entire record 182 is then displayed as illustrated in FIG. 9. Any fields that are not utilised are displayed blank. The date the request was submitted 184, as well as all of the assigned approvers and their passcodes 186 may be obtained here. When viewing the approvers, the approver with a full passcode next to their mail Id is the only approver who has not approved. For example, as illustrated in FIG. 9, the second approver listed under "Stage 2 Approvers" 186 has not yet approved the request indicated in the record 182.

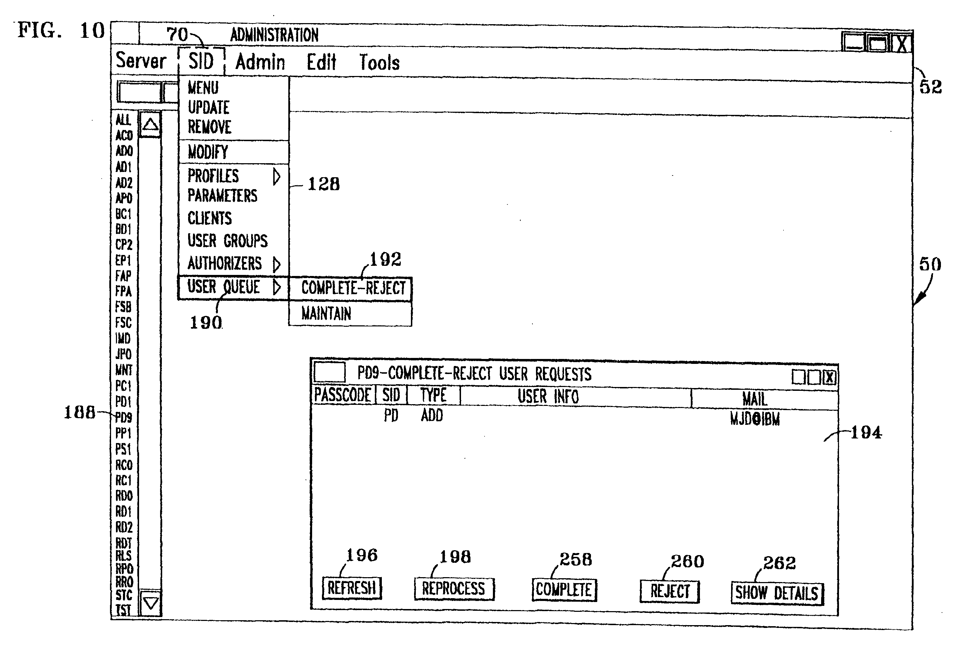

As shown in FIG. 10 an administrator accesses the second queue of the queue management facility by highlighting the SID 188 displayed on the left side of the administration window 50, then clicks "SID" 70 on the toolbar 52, followed by clicking "User Queue" 190 on the pulldown menu 128. The administrator then selects "Complete/Reject" 192 function for the requests pending completion. The administrator can update the screen to current requests in this queue by selecting the "Refresh" 196 key. To reprocess a quest, the administrator highlights the request 194 in the queue and depresses "Reprocess" 198. This will send back to the system a request that was not already created. "Complete" 258 is used after all items have been manually completed for an item. This will send any outstanding notes, remove the request from the queue, and set the status to completed manually. The "Reject" 260 function allows the administrator to reject a request although all approvers have approved. This may be required if there are special instructions in the comment field that cannot be processed. Finally, "Show Details" 262 will allow the entire record to be displayed.

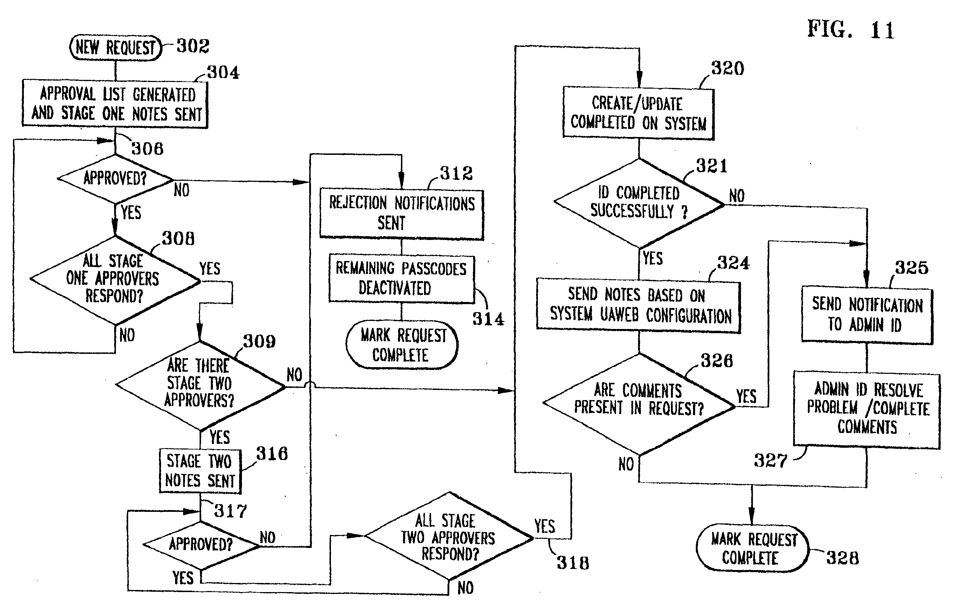

FIG. 11 illustrates the process for the handling and approval of a new or updated user Id. A user submits a request at 302. The user identification administration system prefills all available information from an address book at 304. If the requester information cannot be located, an existing user must sponsor the requester (not shown). Approval notifications 304 for stage one are sent. Approvers enter the approval page for their account and enter the one time use approval code for this request at 306. The approver reviews the request and either approves or rejects the request. If the request is rejected, flow proceeds to step 312 where the approver may type in a reason for the rejection or other comments. If any approver rejects a request, a notification that the request was rejected is generated at 312 with the reason that was entered by the approver, is sent to all other approvers (for that stage only) and also to the requester. Any outstanding approval codes for the request are invalidated at 314.

At step 308 it is determined whether all the stage one approvers have responded. If not, flow proceeds to step 306 where the process continues. Once all stage one approvals are completed, the existence of stage two approvers is determined at step 309. If there are no stage two approvers, flow proceeds to step 320 described herein. If stage two approvers exists, flow proceeds to step 316 where notifications are sent to stage two approvers. The stage two approval process is performed at steps 317 and 318 in a manner similar to steps 306 and 308.

After the approvals are complete at step 318, the user identification administration system creates or updates the Id on the system at step 320. At 321, it is determined if the Id was completed successfully. If so, flow proceeds to step 324 where notifications are distributed over the system. For example, notification that a new user has been granted access to an SID may be sent. At 326 it is determined if there are comments in the request. If not, flow proceeds to step 328 where the process ends and the request is marked as complete. If the Id was not completed successfully at 321 or there are comments in the request at 326, flow proceeds to step 325 where a notification is sent to an administrator. The administrator can then resolve problems and address comments. Once step 327 is complete, flow proceeds to step 328 where the request is marked "completed".

The processes to establish approvers and perform approval described above may be implemented in a system such as that shown in FIG. 1. In such a system, a requestor implemented by workstation 20, for example, desires access to an entity on the network such as server 12 which may contain applications, data, etc. The requestor system 20 submits a request for access which may be directed to an administrative server such as server 14. The administrative server 14 will forward the request to the appropriate approvers which may be implemented by workstation 22 for example. The administrative server 14 accesses a database of system identifiers to determine which approvers are associated with the entity to which the requestor demands access. The database may be part of administrative server 14 and/or part of the workstations 20, 22. Alternatively, these databases can be stored externally and accessed by remote function calls. The approver system 22 authorises access to the entity by providing a response to the administrative server 14 as described above.

An administrator may configure the system from a server directly or through a workstation coupled to the server. When an administrator initiates a change to an SID, the user identification administration system is executed and queries the administrator for a passcode. The user identification administration system then queries the application server for a listing of approved administrators and corresponding passcodes which then checks the list to verify the access permissions of that administrator. If the administrator has the appropriate level of access, he/she may then initiate a number of changes to an SID assigned to him/her. By defining various approvers to an SID, and associating an e-mail address to each approver selected, the administrator can automate a system of execution of requests for access. For example, when a user requests access to a system, the user identification administration system retrieves the database containing the access permissions and identifiers defined for that system as well as the approvers who are assigned to those access permissions and verifies the access rights assigned to that user. It then transmits this request to the designated approvers for authorisation or, alternatively, stores the request information in a queue where it awaits further attention. This queue can be stored on one or more servers within the network.

In addition to the above features, the user administration identification system provides for assisting an organisation's ability to manage and keep current information relating to system users. This option is available through the reverification tool. The reverification tool provides an automated method for periodic confirmations that user access is still required. The reverification tool allows an administrator to load user information directly from a defined system or saved file. Utilising that information along with the company address book, the user identification administration system reverification tool will create informational reports, create and mail notifications, track response status, send reminder notifications, and lock non-responding groups. Available options include: allowing one system or client to be executed on, or many; generating reports of those records that are missing a form of address (identifier); generating reports of those user IDs which are listed in the system or client but which are not found in the address book; generating reports of user information grouped by 'reports to'; generating release notes to be sent to specified individuals or addresses.

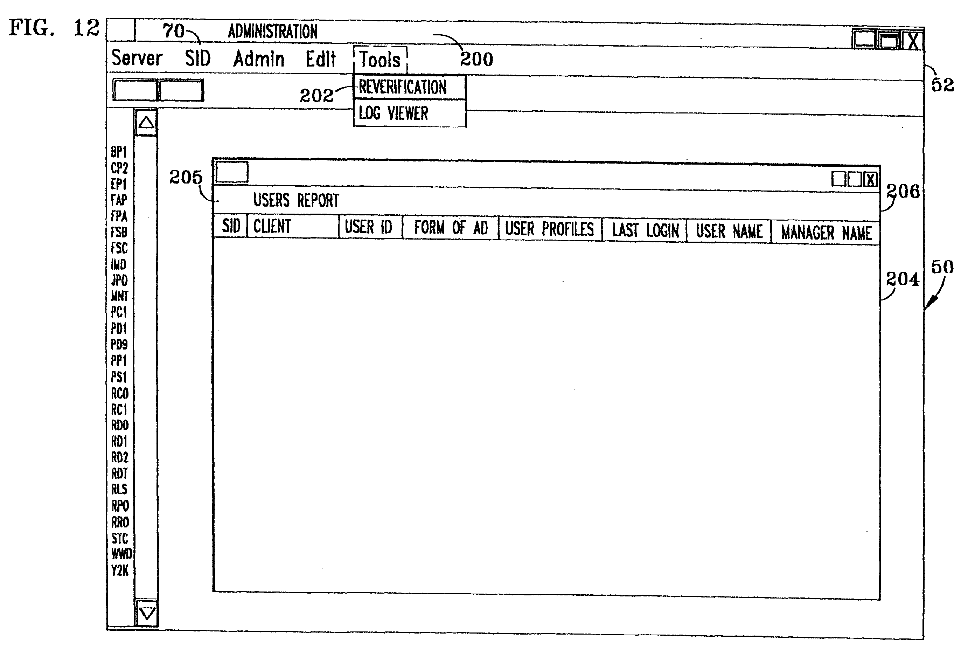

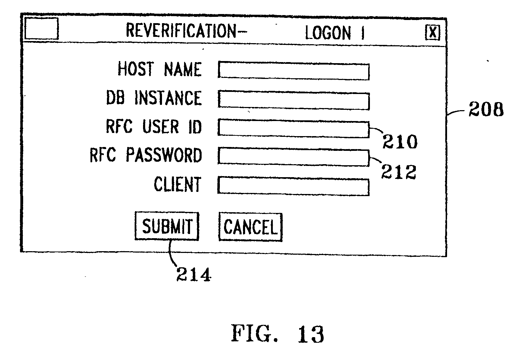

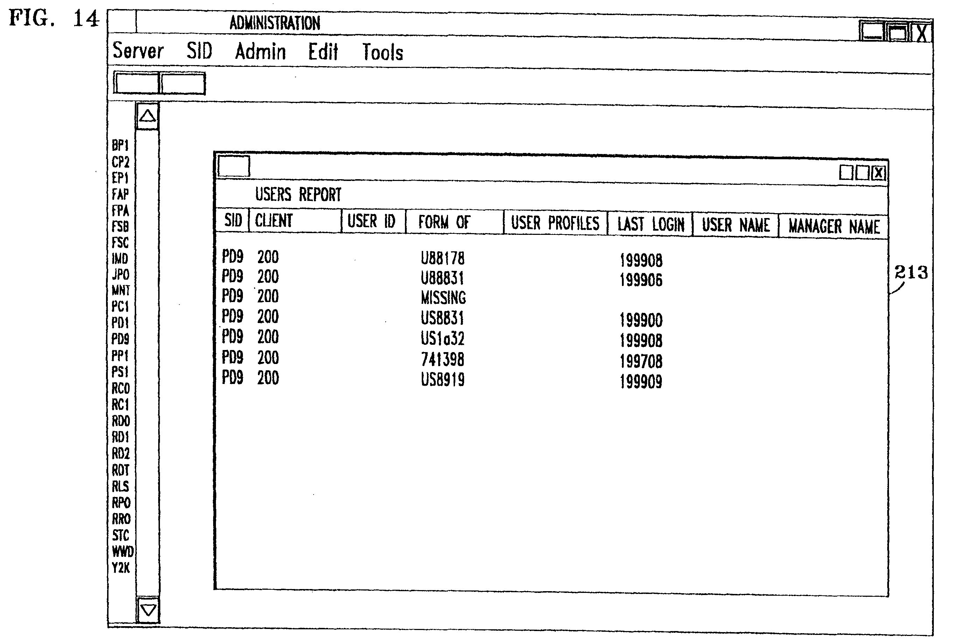

To access the reverification tool, the administrator selects 'tools' on the administration screen tool bar 52 of FIG. 12, followed by selecting 'reverification' 202 on the pull down menu. A reverification window 204 appears. To utilise any functions of the reverification tool, the administrator must first define a group of users for which reverification is desired. A group of users may be organised by system or client. To define a group of users, the administrator selects "Users" 205 from the toolbar 206 on the reverification window 204, followed by "From system" in the pull down menu (not shown). The logon window 208 of FIG. 13 appears. The administrator then enters the information about the system or client being collected. The administrator must enter an Id 210 and password 212 in order to access the user information. When all information has been entered, the administrator clicks "Submit" 214. The user identification administration system will retrieve the information from the system and create a raw table of information 213 pulled from the system as displayed in FIG. 14. Once completed, additional client or system information may be added or grouped with the current list by repeating the process set forth in FIGs. 12 and 13.

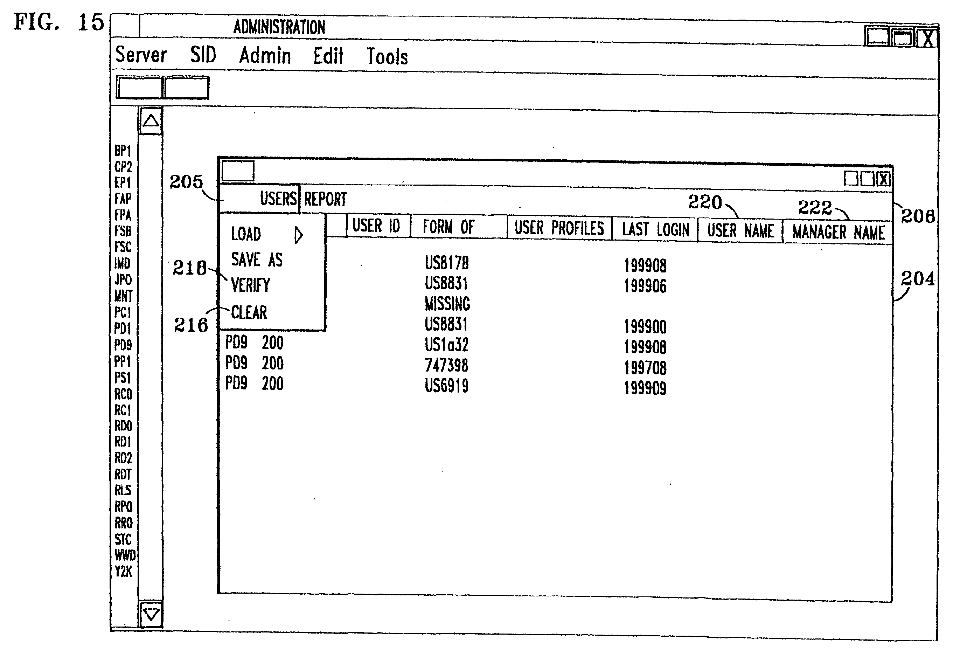

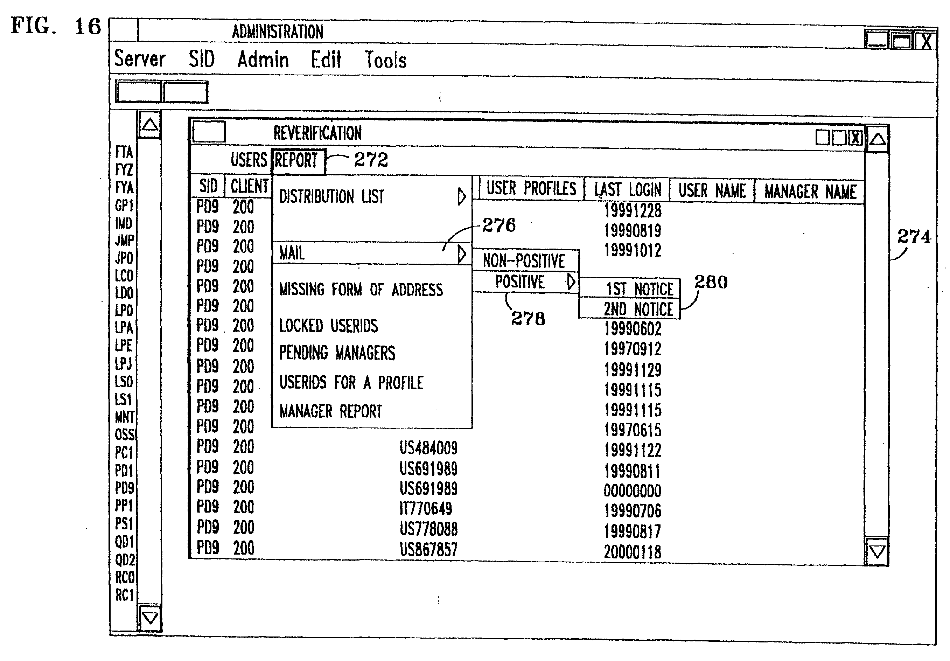

Referring now to FIG. 15, the process of clearing the current list is illustrated. The administrator clicks on "Users" 205, from the reverification tool bar 206, then "Clear" 216 from the pull down menu. When all information to be manipulated has been compiled, the administrator executes the "verify" option 218 which checks each user Id owner against the address book to verify whether they are still in employ. As the function executes, the "user name" 220 and "manager name" 222 fields will be populated on the reverification window 204. User IDs with missing or invalid data are highlighted in red (not shown). Corrections may be completed and the above steps repeated before continuing. When the verify function has been completed and the system information is as desired, the reverification report functions may be used as shown in FIG. 16.

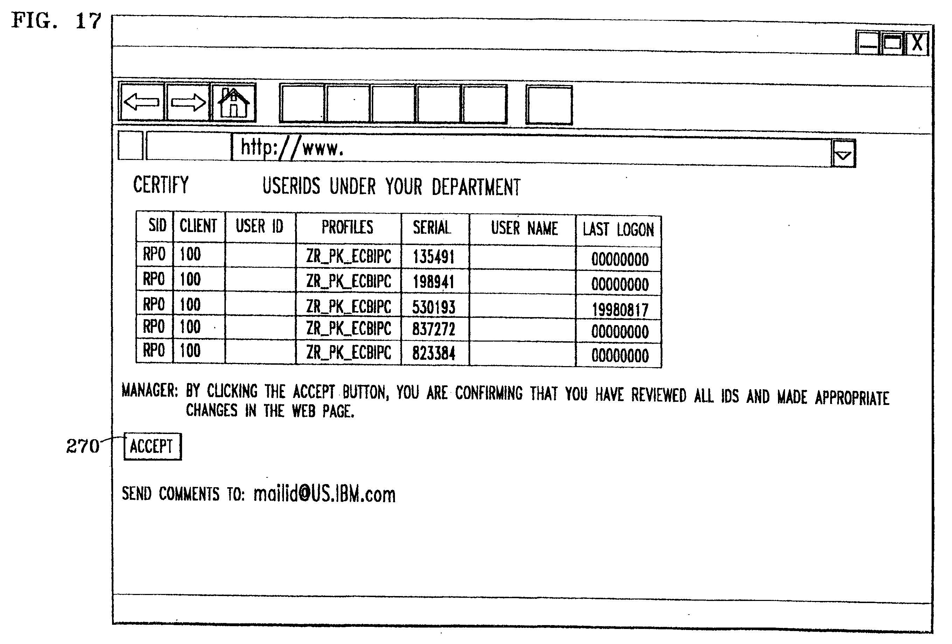

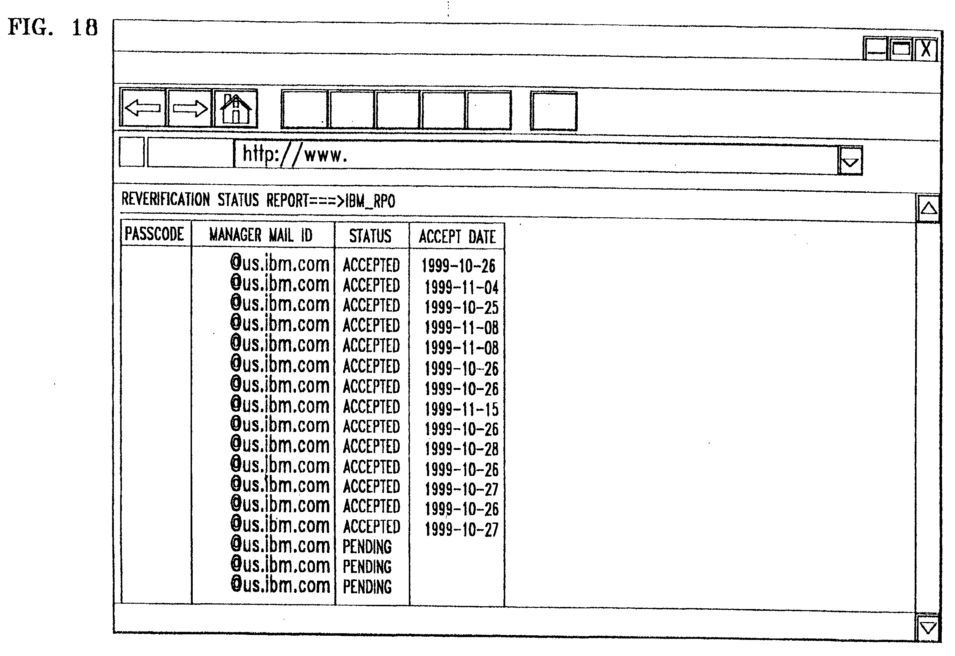

One exemplary report is a mail report which sends reverification notes to managers which contains a list of the user IDs owned by that manager along with each user's access information. FIG. 16 depicts an administrator screen for generation of a reverification note. FIG. 17 illustrates the reverification note as seen by the receiving manager. The managers are asked to verify the accuracy and currency of the user information and submit any necessary changes. The managers may also be given a designated time limit for which they must respond. In the notes to the managers is a passcode. To verify their employee list, the manager activates a link to a network page contained in their reverification notification which automatically registers their passcode (neither shown). By entering a confirmation 270 on this network page, the reverification completion is registered and the date is recorded. If one or more managers do not respond to the reverification note within a predetermined time, the administrator may execute a second notice as illustrated in FIG. 16, by selecting "Report" 272 on the reverification window 274, followed by "Mail"276 on the pull down menu, then "Positive" 278 and "2nd Notice" 280. This will send a second notification to only those managers that have not as yet verified and will contain all of the original information. The second notification will give another limited period to respond which is variable by the administrator. After the second period, the administrator has the choice of repeating the second notification process or performing a lockdown (i.e., a denial of access rights). To perform a lockdown, the administrator selects Users, lock, and enters the run code for the verification (not shown). Alternatively, the system may be configured to perform an automatic lockdown once the second time period has expired. The lockdown will create a lock on the target SID of all IDS that have not yet been verified. Any subsequent verifications from outstanding managers will automatically unlock their employees IDs. FIG. 18 illustrates an example of a Reverification Status Report which is compiled by an administrator to verify which managers have responded by the predetermined date and any outstanding notes. This information includes the actual date in which the manager responded to the note and is available to the administrator from a network status page shown in FIG. 18. If a manager does not reply to this request within a predetermined time, all user IDs owned by this manager are then removed from the system. New requests for access must then be initiated.

The reverification processes described above may be implemented in a system such as that shown in FIG. 1. In such a system, a notice sending device may be implemented by server 14 which issues notices to notice receiving devices such as workstation 20. As described above, the notices request reverification that a user is permitted access to an entity (e.g., server 12) on the system. The administrative server 14 accesses a database which contains user IDs associated with systems and a company address book. The database may be part of administrative server 14 and/or part of the workstations 20, 22. Alternatively, these databases can be stored externally and accessed by remote function calls. The administrative server 14 compares the user IDs to the address book to determine if individuals have left the company, etc. The administrative server 14 then acts as the notice sending device and sends a notice to a workstation 20 (i.e., notice receiving device). As described above, the notice receiver must confirm access rights for users listed in the notice. This is accomplished by the notice receiving device (i.e., workstation 20) sending a reply to the notice sending device (i.e., administrative server 14).

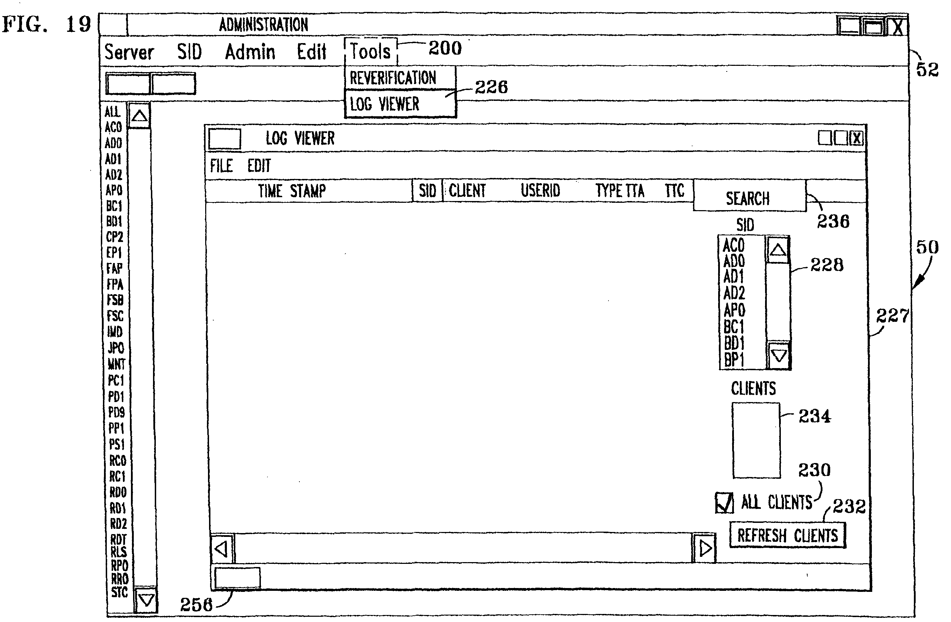

In addition to the reverification tool, the user identification administration system provides a log viewer tool that allows an administrator to access the database for information searches as well as to collect measurement data. FIG. 19 illustrates how an administrator can search the database using the log viewer tool. The administrator first selects the "tools" function 200 from the tool bar 52 on the administration screen 50, followed by selecting "log viewer" 226 from the pull down menu. The log viewer window 227 appears. The scope of the search or the measurements collected is variable. It may be limited to one client on one SID, or as wide as all clients on all available SIDs. All SIDs that are accessible to the admin ID that is logged on, will be listed in the scrollable sub-window 228 labelled, "SIDS", which is located within the log viewer window 227. A single SID may be selected, multiple SIDs, or a block of SIDs. To select one SID, the administrator clicks on the desired SID (not shown). It will be highlighted. To select multiple SIDs, the administrator depresses the "Ctrl" key on the keyboard while selecting the desired SIDs (not shown). Each of the selected SIDs will be highlighted. An administrator can also select a range of SIDs by clicking on the desired SID at the top of the range, depressing and holding the "shift" key on the keyboard, and selecting the SID at the bottom of the range (not shown). All SIDs between the two SIDs will be highlighted.

If only one SID is selected, the search may be further limited to a particular client. To do this, the administrator first selects the desired SID listed on the sub-window 228 as indicated above, then removes the check in the box 230 marked, "All Clients", followed by clicking on the "Refresh Clients" button 232. All clients that have been defined in the user identification administration system for that SID will be displayed in the "Clients" box 234. The administrator will use the same methods as described above for selecting SIDs to select the client(s) to be included in the search.

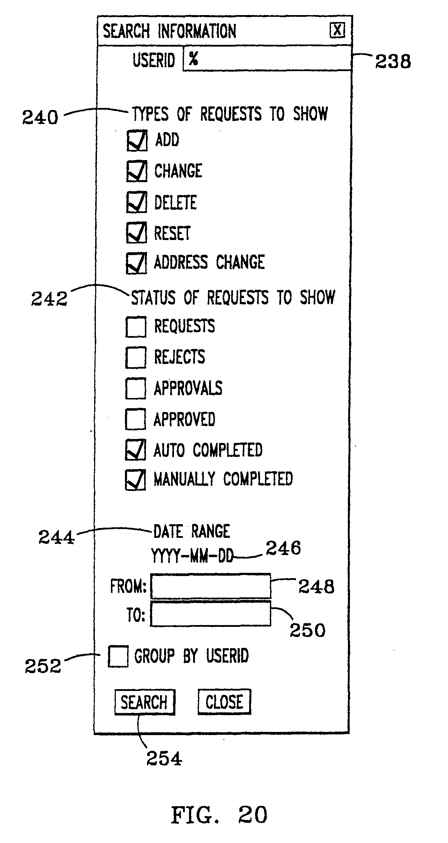

Once the SIDs or clients have been selected, the administrator clicks on the "search" button 236. The pop-up window of FIG. 20 appears. There are five major types of searches that may be done. The "userid" field 238 allows for a search to be limited to a particular user Id. The administrator types in the user Id for the search in this field 238. If no user Id is to be defined, this field 238 may be left blank except for the "%" wildcard symbol which indicates that all user IDs will be selected. Next, the type of request is selected. This limiter is useful for gathering statistics on information, such as the number of password resets that were requested within a given period of time. To include a request type in the search, one of the five boxes within the "Types of requests to show" section 240 must be checked. The third section, "Status of requests to show" 242 is used to determine the current status of all requests within the selected SID(s) or Client(s). One or more boxes within this section may be selected. The "date range" section 244 allows an administrator to limit the selection to those status's within the date range specified. For example, to gather information for a particular month, the administrator enters the first day of the desired month, in the format specified, in the "From" line 248, and the last day of the desired month in the "To" line 250. The "To" line 250 may be left blank to select the current date. The last option on the search function is the "Group by Userid" box 252. The administrator selects this if the results of the search should be presented alphabetically by user id rather than the default 'chronological' sort.

Once the selections for the search have been made, the administrator selects the "Search" button 254 to execute. The user identification administration system will create a summary of all entries that match the criteria and list the results on the screen. A variety of information will be displayed such as the time that each request achieved the particular status defined by the search, the total time for a request to be approved, the total time for a request to be completed, and the current status of the request as defined by the search (not shown). The administrator may double click on any entry in the summary listing to display complete details of an entry. An administrator may also obtain a summary status for all records listed in the search results, such as the total number of requests found in the search, the average time to approve the total requests in the search, the average time to complete the requests, and other similar types of information (not shown). To perform a new search, the administrator clicks on the "Clear" button 256 in the log viewer screen 227 of FIG. 19, followed by selecting the "Search" button 236 as described above. The administrator would repeat the same steps described above in FIG. 20 for defining a search.

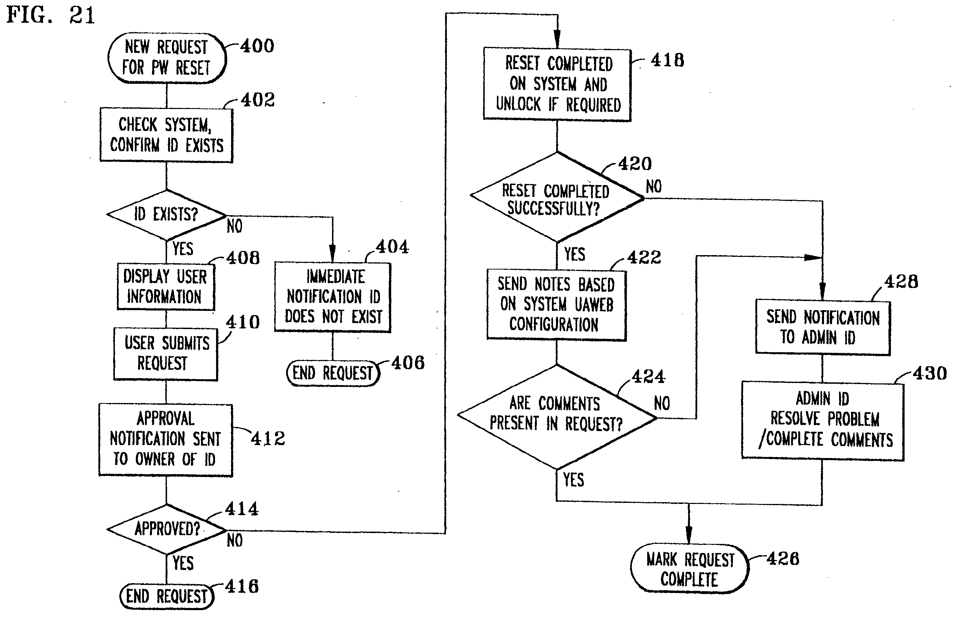

Another useful feature of the user identification administration system is the password reset function which allows a user to instantly reset a password without invoking third party approvals. Certain systems will disable an ID and password if an incorrect password has been entered multiple times (e.g., three log-in attempts with wrong password). This is a security feature to prevent unauthorised access to a system. The password reset function allows for automatic approval of password resets under administrator-defined circumstances. FIG. 21 illustrates the process for resetting a password. A user submits a request at 400. The user identification administration system checks the system to verify that the current user ID exists at 402. If the ID does not exist, flow proceeds to step 404 where a notification is immediately sent to the user indicating that the ID does not exist and the request process is then terminated at 406. If the Id does exist, the user identification administration system retrieves the user information from a database (not shown) and displays the information to the user 408. At 410 the user submits a request for a password reset. The system receives the request and sends an approval notification to the owner of the ID at 412. The owner of the ID may be the actual user or alternatively, the user's manager depending upon the system configuration. At 414, it is determined whether the request is approved. If the owner of the ID does not approve the request, the request process is then terminated at 416. If the request is approved, flow proceeds to step 418 where the system executes the password reset on the system and, if necessary, unlocks the ID. At step 420 it is determined if the reset was completed successfully. If so, flow proceeds to step 422 where notifications are distributed over the system. For example, a notification that a user's password has been reset may be sent to the user's manager or an administrator. At 424 it is determined if there are comments present in the request. If not, flow proceeds to step 426 where the process ends and the request is marked as "completed". If the reset was not completed successfully at 420, or there are comments in the request at 424, flow proceeds to step 428 where a notification is sent to an administrator. The administrator can then resolve the problems and address comments. Once step 430 is complete, flow proceeds to step 426 where the request is marked "completed".

The password reset processes described above may be implemented in a system such as that shown in FIG. 1. In such a system, a requesting device may be implemented by a workstation 20 which issues a request for a password reset to an approving device such as server 14. As described above, the request for password reset is submitted unlock a user's password. The approving device (i.e., server 14) accesses a database which contains user IDs to confirm the existence of the user ID. The database may be part of server 14 and/or part of the workstations 20, 22. Alternatively, these databases can be stored externally and accessed by remote function calls. The database also includes the identity of the owner of the user ID. The approving device then sends an approval notice to the owner of the user ID to request approval to unlock the user ID and password. The address of the "owner" may be an e-mail address for one of the workstations 20, 22. In a preferred embodiment, the requesting device and the owner are one in the same so that a user can reset his or her own password. The approving device (i.e., server 14) resets the password if approval is received from the owner (e.g., workstation 20) or terminates the request for password reset if no approval is received.

As described above, the present invention can be embodied in the form of computer-implemented processes and apparatuses for practising those processes. The present invention can also be embodied in the form of computer program code containing instructions embodied in tangible media, such as floppy diskettes, CD-ROMs, hard drives, or any other computer-readable storage medium, wherein, when the computer program code is loaded into and executed by a computer, the computer becomes an apparatus for practising the invention. The present invention can also be embodied in the form of computer program code, for example, whether stored in a storage medium, loaded into and/or executed by a computer, or transmitted over some transmission medium, such as over electrical wiring or cabling, through fibre optics, or via electromagnetic radiation, wherein, when the computer program code is loaded into and executed by a computer, the computer becomes an apparatus for practising the invention. When implemented on a general-purpose microprocessor, the computer program code segments configure the microprocessor to create specific logic circuits.

While preferred embodiments have been shown and described, various modifications and substitutions may be made thereto without departing from the scope of the invention. Accordingly, it is to be understood that the present invention has been described by way of illustration and not limitation.

## Claims

1. A method for automating administration functions in a distributed network environment for use in managing and verifying access rights to an entity for a plurality of different types of entities within the network, the method comprising:
compiling a list of user IDS, said user IDs associated with at least one system;
retrieving an address book;
comparing data in said list with data contained in said address book, wherein invalid data in said list is flagged; and
generating user-defined reports based upon results of said comparing of said data.

2. A method according to claim 1, further comprising:
accessing said list of user IDs via remote function call.

3. A method according to claim 1 or 2, further comprising:
modifying data contained in said results of said comparing of said data.

4. A method according to any of claims 1 to 3, further comprising:
sending notices to notice receivers by a notice sender, said notices including: confirmatory requests for verification of continued access rights;
user ID data for each said user ID currently have access rights;
a user-defined time limit for responding to said notice; and
verifying said continued access right based on a response to said notice by said notice receiver.

5. A method according to claim 4, wherein said notices include a first notice and a second notice, wherein
said second notice is sent to said notice receivers who have not responded to said first notice by said time limit and, wherein further,
said second notice contains a second user-defined time limit for responding.

6. A method according to claim 4 or 5, wherein each of said notices contains a unique passcode, said passcode identifying a notice receiver.

7. A method according to claim 6, further comprising:
each of said notices includes a link to a network page, wherein activating said link causes said passcode to be automatically registered.

8. A system for automating administration functions in a distributed network environment for use in managing and verifying access rights to an entity for a plurality of different types of entities within the network, the system comprising:
a computer network including:
at least one entity;
at least one notice sending device in communication with said at least one network entity;
at least one notice receiving device in communication with said notice sending device;
a database of user IDs, wherein said user IDs are associated with at least one system; and
an address book containing user information;
said notice sending device verifying access rights in response to said user IDs and said address book.

9. A system according to claim 8, wherein said notice sending device:
compiles a list of user IDs;
retrieves the address book;
performs a comparison of data in said list with data contained in said address book, wherein invalid is flagged; and
generates user-defined reports based upon results of said comparison.

10. An article of manufacture comprising:
a computer usable medium having a computer readable program code embodied therein for automating administration functions in a distributed network environment for use in managing and verifying access rights for a plurality of different types of entities within the network, the computer readable program code in said article of manufacture comprising:
computer readable program code for causing a computer to compile a list of user IDs, said user IDs associated with at least one system;
computer readable program code for causing a computer to retrieve an address book;
computer readable program code for causing a computer to compare data in said list with data contained in said company address book, wherein invalid data in said list is flagged; and
computer readable program code for causing a computer to generate user-defined reports based upon results of said comparing of said data.
